(19) Europäisches Patentamt
European Patent Office
Office européen des brevets

(11) **EP 4 289 982 B1**

(12) **EUROPEAN PATENT SPECIFICATION**

(45) Date of publication and mention
of the grant of the patent:
**11.06.2025 Bulletin 2025/24**

(21) Application number: **22749785.6**

(22) Date of filing: **03.02.2022**

(51) International Patent Classification (IPC):
*C22C 19/05* (2006.01)    *B33Y 80/00* (2015.01)
*B33Y 70/00* (2020.01)    *B22F 1/00* (2022.01)
*B22F 10/28* (2021.01)    *B22F 10/34* (2021.01)

(52) Cooperative Patent Classification (CPC):
**B33Y 70/00; B22F 1/00; B22F 10/28; B33Y 80/00;
C22C 1/0433; C22C 19/056; Y02P 10/25**

(86) International application number:
**PCT/JP2022/004263**

(87) International publication number:
**WO 2022/168914 (11.08.2022 Gazette 2022/32)**

(54) **NI-BASED ALLOY POWDER FOR ADDITIVE MANUFACTURING, ADDITIVE MANUFACTURED COMPONENT, AND ADDITIVE MANUFACTURING METHOD THEREOF**

NI-BASIERTES LEGIERUNGSPULVER ZUR ADDITIVEN FERTIGUNG, ADDITIV GEFERTIGTES BAUTEIL UND SEIN ADDITIVES FERTIGUNGSVERFAHREN

POUDRE D'ALLIAGE À BASE DE NI POUR FABRICATION ADDITIVE, ARTICLE FABRIQUÉ PAR FABRICATION ADDITIVE ET SON PROCÉDÉ DE FABRICATION ADDITIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.02.2021 JP 2021017109**

(43) Date of publication of application:
**13.12.2023 Bulletin 2023/50**

(73) Proprietor: **Proterial, Ltd.**
**Tokyo 135-0061 (JP)**

(72) Inventors:
• **AOTA, Kinya**
**Tokyo 108-8224 (JP)**
• **KUWABARA, Kousuke**
**Tokyo 108-8224 (JP)**

(74) Representative: **Becker, Eberhard**
**Becker Kurig & Partner**
**Patentanwälte mbB**
**Bavariastraße 7**
**80336 München (DE)**

(56) References cited:
**JP-A- 2017 036 485    JP-A- 2018 168 400
JP-A- 2020 147 781    JP-A- 2020 147 781
JP-A- 2020 152 978**

**Description**

[Technical Field]

The present invention relates to additive manufactured components having excellent elevated temperature strength properties, a manufacturing method thereof, and a Ni-based alloy powder for additive manufacturing.

[Background Art]

There are needs for additive manufactured components used at elevated temperatures in, for example, aircraft gas turbine engines and power generation gas turbines. A gamma prime (γ') precipitation type Ni-based alloys such as 713C alloy have excellent high strength properties at elevated temperature. Gamma prime is a precipitation mainly composed of $Ni_3$ (Al, Ti), and have an effect of increasing the high temperature strength of Ni-base alloy. In addition, it is possible to manufacture the component with complicated shapes for using in elevated temperature by additive manufacturing process.

For example, Patent Literature 1 discloses additive manufacturing methods in which a value obtained by dividing a scanning interval by a laser spot diameter is from 0.6 to 1.0. A laser with the value is irradiated along a plurality of scanning lines parallel to each other on the layer in additive manufacturing of a Ni-based alloy having 10% to 16% of Cr, 4.5% to 7.5% of Al, 2.8% to 6.2% of Mo, 0.8% to 4% of Nb+Ta, 0.01% to 2% of Ti, 0.01% to 0.3% of Zr, and 0.01% to 0.3% of C.

[Citation List]

[Patent Literature]

[Patent Literature 1]
Japanese Patent Laid-Open No. 2020-147782

[Summary of Invention]

[Technical Problem]

As mentioned above additive manufacturing methods disclosed in Patent Literature 1 can build the component with excellent creep rupture properties at high temperatures. However, there is a possibility that solidification cracks could occur in additive manufactured component of gamma prime precipitation type alloys. Cracks may lead to deterioration of high-temperature creep properties, and additive manufactured component without cracks are required.

An objective of the present invention is to provide a Ni-based alloy powder for additive manufacturing, additive manufactured component, an additive manufacturing method of additive manufactured component, all of which prevent development of cracks.

[Solution to Problem]

The present invention is a Ni-based alloy powder for additive manufacturing containing, in mass%, 10.0% to 16.0% of Cr, 4.0% to 9.0% of Al, 1.0% to 6.0% of Mo, 0.5% to 4.0% of Nb, 0.5% or less of Ti, 0.5% or less of Zr, 0.06% to 0.4% of C, and 0.04% or less of B with the balance being Ni and unavoidable impurities, in which (Equation 1) below is satisfied.

$$150 \leq 120Nb + 650Zr + 32Ti - 385C \leq 270 \cdots \text{(Equation 1)}$$

In addition, it is preferable that the Ti content be 0.002% to 0.2%.

In addition, the present invention is an additive manufactured component: a composition which contains, in mass%, 10.0% to 16.0% of Cr, 4.0% to 9.0% of Al, 1.0% to 6.0% of Mo, 0.5% to 4.0% of Nb, 0.5% or less of Ti, 0.5% or less of Zr, 0.06% to 0.4% of C, and 0.04% or less of B with the balance being Ni and unavoidable impurities, and satisfies $150 \leq 120Nb + 650Zr + 32Ti - 385C \leq 270$ ... (Equation 1); and a structure having dendrites and element segregation parts between adjacent dendrites, in which the dendrites have a width of 5 μm or less and the element segregation parts have a width of 200 nm or less in cross-sectional structure observation.

Here, at least one of Cr, Mo, Nb, and Zr may be more concentrated in the element segregation parts than in the dendrites.

In addition, the present invention is an additive manufacturing method including: irradiating the Ni-based alloy powder for additive manufacturing with an electron beam or a laser beam for melting and solidification to build a component.

[Advantageous Effects of Invention]

According to the present invention, it is possible to provide a Ni-based alloy powder for additive manufacturing, an additive manufactured component, and a additive manufacturing method, all of which prevent cracks in the component.

[Brief Description of Drawings]

Fig. 1 is a view showing an example of the occurrence of a crack in an additive manufactured component.
Fig. 2 is a graph showing a relationship between the solid phase proportion and temperature based on thermodynamic calculations.
Fig. 3 is a perspective view illustrating a schematic configuration of a laser additive manufacturing method.
Fig. 4 is a structure photograph of a cross section of an additive manufactured component of the present invention in the build direction.
Fig. 5 is a high magnification photograph of a cross section of the lamination molded article of the present invention in a direction perpendicular to the lamination direction.
Fig. 6 is a high magnification photograph showing a dendrite width and an element segregation width of an additive manufactured component in which an alloy powder B (example) is used.
Fig. 7 is a high magnification photograph showing a dendrite width and an element segregation width of an additive manufactured component in which an alloy powder C (comparative example) is used.

[Description of Embodiments]

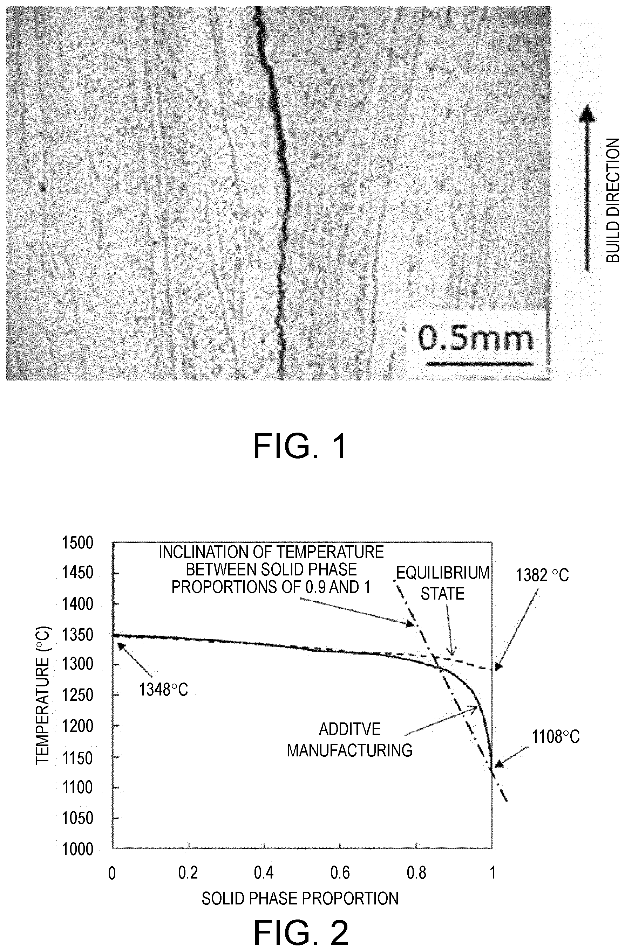

First, the mechanism of the occurrence of cracks will be described with respect to the example of the occurrence of a crack of the additive manufactured component of Fig. 1. As shown in Fig. 1, a crack is likely to occur along a grain boundary in the build direction, and this crack also occurs at a grain boundary. In particular, in both a powder bed fusion (PBF) coupling method and a directed energy deposition (DED) method, a powder is locally melted and solidified by a laser or an electron beam, and so the solidification cooling rate of a additive manufactured component is significantly higher than that of a cast product. For this reason, when gamma prime precipitation type Ni-based alloy powders which have been developed for casting in the past are melted and solidified, cracks are likely to occur due to solidification segregation of Nb, Zr, and the like. Regarding phase transformation during the solidification process, all phases are liquid phases at high temperatures, liquid and solid phases coexist when the temperature decreases, and the phases become only solid phases when the temperature further decreases. At this time, cracks due to solidification segregation occur immediately before solidification is completed. Therefore, it is thought that it should be possible to prevent cracking by selecting a composition that would reduce the temperature difference between a state immediately before solidification in which the solid phase proportion is 0.9 and a state immediately after solidification in which the solid phase proportion is 1.0.
Therefore, in the present invention, as the composition that can reduce the temperature difference between the solid phase proportions of 0.9 and 1.0, a composition containing, in mass%, 10.0% to 16.0% of Cr, 4.0% to 9.0% of Al, 1.0% to 6.0% of Mo, 0.5% to 4.0% of Nb, 0.5% or less of Ti, 0.5% or less of Zr, 0.06% to 0.4% of C, and 0.04% or less of B with the balance being Ni and unavoidable impurities has been selected, and (Equation 1) below has been found for an effect of elements that have a large correlation with cracking (crack susceptibility index). By using a Ni-based alloy powder for additive manufacturing-that satisfies these requirements, it is possible to provide an additive manufactured component in which cracks are less likely to form.

$$150 \leq 120\mathrm{Nb} + 650\mathrm{Zr} + 32\mathrm{Ti} - 385\mathrm{C} \leq 270 \cdots \text{(Equation 1)}$$

Hereinafter, one embodiment of the present invention will be described. First, a Ni-based alloy powder for additive manufacturing (hereinafter sometimes referred to as an alloy powder) will be described, and then an additive manufactured component and a additive manufacturing method will be described. However, the present invention is not limited to the embodiments exemplified here, and can be appropriately combined and improved within the scope not departing from the technical idea of the invention.

<Alloy powder>

One embodiment of an alloy powder will be described. In the following description, % indicates mass%. In addition, in the present specification, a numerical range indicated using "to" means a range including numerical values denoted before and after "to" as a lower limit value and an upper limit value. In addition, an upper limit value and a lower limit value can be arbitrarily combined.

(Cr: 10.0% to 16.0%)

Cr has an effect of improving corrosion resistance and is an important main component for obtaining favorable corrosion resistance at high temperatures. The Cr content is necessarily 10.0% or more to improve corrosion resistance by an oxide film of Cr. If an excess amount of Cr is added, a brittle Cr-based BCC phase is formed, and therefore the Cr content is set to 16.0% or less. The Cr content is preferably 11.0% to 14.0%. The Cr content is more preferably 12.0% to 13.0%.

(Al: 4.0% to 9.0%)

Al binds with Ni to precipitate a gamma prime phase. Since the formation of a gamma prime phase enhances high-temperature creep rupture properties, the Al content is necessarily 4.0% or more. If an excess amount of Al is added, a brittle compound of $NiAl_2$ is produced, and therefore the Al content is set to 9.0% or less. The Al content is preferably 6.0% to 8.0%. The Al content is more preferably 6.0% to 7.0 %.

(Mo: 1.0% to 6.0%)

The Mo content is necessarily 1.0% or more to improve corrosion resistance and enhance high-temperature creep rupture properties due to solid-solution strengthening. If an excess amount of Mo is added, other additive elements cannot be increased, and therefore the Mo content is set to 6.0% or less. The Mo content is preferably 3.0% to 5.0%. The Mo content is more preferably 3.5% to 4.5%.

(Nb: 0.5% to 4.0%)

Since Nb contributes to enhancement of a high-temperature creep rupture properties due to solid-solution strengthening and also contributes to enhancement of high-temperature creep rupture properties due to formation of carbides at grain boundaries, the Nb content is necessarily 0.5% or more. In addition, Nb is one of the elements involved in a crack susceptibility index. If an excess amount of Nb is added, Nb added above a solid solution limit forms a brittle Laves phase and cracks occur, and therefore the Nb content is set to 4.0% or less. The Nb content is preferably 1.0 to 3.0. The Nb content is more preferably 1.5% to 2.5%.

(Ti: 0.5% or less)

Ti is an element that produces a gamma prime phase which is a compound with Ni to enhance high-temperature creep rupture properties. No Ti (0%) can be added, but Ti is preferably incorporated. Since Ti is also one of the elements involved in a crack susceptibility index, in a case where Ti is incorporated, the content thereof is set to 0.5% or less to suppress occurrence of cracks. The Ti content is preferably set to 0.002% or more to reliably exhibit the effect of Ti and to 0.2% or less from the viewpoint of further suppressing the occurrence of cracks. The Ti content is more preferably 0.002% to 0.1%.

(Zr: 0.5% or less)

Zr is an element that forms carbides at grain boundaries and suppresses grain boundary sliding to enhance a high-temperature creep rupture strength. No Zr (0%) can be added, but Zr is preferably incorporated. Since Zr is also one of the elements involved in a crack susceptibility index, in a case where Zr is incorporated, the content thereof is set to 0.5% or less because an excess amount of Zr added causes cracks. The Zr content is preferably 0.01% to 0.30%. The Zr content is more preferably 0.02% to 0.2%.

(C: 0.06% to 0.4%)

C is one of the elements involved in a crack susceptibility index and is an element suppressing cracking. The C content is necessarily 0.06% or more to prevent cracking and to segregate appropriate carbides at grain boundaries.

However, if an excess amount of C is added, carbides are excessively formed and the high-temperature creep rupture properties is lowered, and therefore the C content is set to 0.4% or less. The C content is preferably 0.1% to 0.3%. The C content is more preferably 0.15% to 0.25%.

(B: 0.04% or less)

B is an element that forms compounds with Cr and Mo at grain boundaries and suppresses grain boundary sliding to enhance high-temperature creep rupture properties. No B (0%) can be added, but B is preferably incorporated. In a case where B is incorporated, if an excess amount of B is added, the high-temperature creep rupture properties are lowered, and therefore the content thereof is set to 0.04% or less. The B content is preferably 0.002% to 0.03%. The B content is more preferably 0.005% to 0.02%.

In addition, the composition of the alloy of the present embodiment satisfies $150 \leq 120Nb+650Zr+32Ti-385C \leq 270$ (Equation 1). In (Equation 1), each element symbol represents the content (mass%) of the element as it is. Hereinafter, the value calculated by the relational Equation (Equation 1) will be referred to as a crack sensitivity index.

The larger the crack susceptibility index, the more likely it is to crack. That is, there is a relationship in that a large amount of Nb, Zr, and Tr added increases the crack susceptibility index, and a large amount of C added decreases the crack susceptibility index. In addition, the crack susceptibility index has a relationship in that smaller the crack susceptibility index, the lower the high-temperature creep rupture strength, and the larger the crack susceptibility index, the higher the high-temperature creep rupture strength. For example, in a case where it is desired to achieve both the suppression of cracks and the high-temperature creep rupture characteristics, the composition range may be determined so that the crack susceptibility index is neither too high nor too small. Specifically, the crack susceptibility index is 270 or less, preferably 250 or less. In addition, the crack susceptibility index is 150 or more, preferably 180 or more.

Considering the composition selected from the above-described preferred range for the lower limit of the crack susceptibility index, in a case of a composition of, for example, 12.0% of Cr, 7.0% of Al, 4.0% of Mo, 1.5% of Nb, 0.1% of Ti, 0.1% of Zr, 0.18% of C, and 0.02% of B with the balance being Ni and unavoidable impurities, the crack susceptibility index becomes about 180, and also in this case, it is effective in preventing cracking. On the other hand, in a case of a composition of 12.0% of Cr, 7.0% of Al, 4.0% of Mo, 1.2% of Nb, 0.002% of Ti, 0.01% of Zr, 0.1% of C, and 0.02% of B with the balance being Ni and unavoidable impurities, the crack susceptibility index becomes about 110. In this case, each element is within the category of preferable values, but both Nb and C are reduced, and the composition is considered to have limited the effects of Zr and Ti, resulting in collapse of the balance of Nb, Zr, Ti and C and (Equation 1) could not be effectively satisfied, whereby the high-temperature creep rupture properties become a low value. For this reason, the lower limit value is 150 or more. An example of a crack susceptibility index of 150 includes a composition of, for example, 12.0% of Cr, 7.0% of Al, 4.0% of Mo, 1.99% of Nb, 0% of Ti, 0.1% of Zr, 0.4% of C, and 0.02% of B with the balance being Ni and unavoidable impurities.

The derivation process of (Equation 1) for calculating the crack susceptibility index will also be described. Thermodynamic calculations were used to derive the crack susceptibility index. The thermodynamic calculation method will be described. During solidification, liquid and solid phases coexist as the temperature drops from a liquid phase, and the phases become only solid phases when the temperature further decreases. Assuming that cracks occur during this solidification process, the relationship between the solid phase proportion and temperature was calculated. Fig. 2 shows a graph of a relationship between the solid phase proportion and temperature based on thermodynamic calculations. The horizontal axis is the solid phase proportion, and the vertical axis is the temperature (°C). Here, the calculation was performed with a composition of 12.1% of Cr, 5.69% of Al, 4.53% of Mo, 2.03% of Nb, 0.65% of Ti, 0.10% of Zr, and 0.014% of C with the balance of Ni. The dotted line shows values obtained by thermodynamically calculating an equilibrium phase diagram, with a liquidus temperature of 1348°C and a solidus temperature of 1382°C. The difference between the liquidus temperature and the solidus temperature is 34°C. On the other hand, rapid solidification of additive manufacturing is simulated, and thermodynamic calculations were performed using a Scheil solidification model.

As a result of thermodynamic calculations, the liquidus temperature was the same as 1382°C, but the solidus temperature was 1108°C. The difference between the liquidus temperature and the solidus temperature was 274°C, thereby obtaining a result in that the temperature difference became larger than that of the values in the equilibrium state. In a case of slow solidification such as in precision casting, the state is close to an equilibrium state, and cracks are less likely to occur. However, in additive manufacturing, the solidification rate is high and the solidus temperature of a segregation part which is a final solidification part is lowered due to solidification segregation caused by rapid solidification. Focusing on this temperature difference and considering that cracks occur immediately before solidification, the gradient immediately before the completion of solidification was large as shown in Fig. 2, and specifically, the inclination (gradient) was steep at a solid phase proportion of 0.9 or more. The steeper the inclination, the longer the time until solidification, and the longer the solidification time between the solid phase proportions of 0.9 and 1.0 immediately before the completion of solidification at which cracks occur. It is thought that this caused cracking.

Therefore, it was thought that it is possible to suppress the occurrence of cracks by relaxing the inclination at a solid phase proportion of 0.9 or more. In response to this idea, the alloy compositions were examined extensively, and the value obtained by dividing the amount of change in temperature difference between the solid phase proportion of 0.9 and the solid phase proportion of 1 by the amount of change in component (unit: °C/mass%) for each element content revealed that the elements that contribute significantly to the relaxation of the gradient immediately before the completion of solidification (elements with a large correlation with cracking) are Nb, Zr, Ti, and C. For example, in a case of Nb, if the component is reduced by 0.5 mass%, the temperature difference between the solid phase proportions of 0.9 and 1 will be from 190°C to 130°C, and the amount of change in temperature difference will be 60°C, so the coefficient is set to 120 by dividing 60 by 0.5. Similarly, in a case of Zr, if the component is reduced by 0.06 mass%, the temperature difference between the solid phase proportions of 0.9 and 1 will be from 190°C to 151°C, and the amount of change in temperature difference will be 39°C, so the coefficient is set to 650 by dividing 39 by 0.06. In a case of Ti, if the component is reduced by 0.25 mass%, the temperature difference between the solid phase proportions of 0.9 and 1 will be from 190°C to 182°C, and the amount of change in temperature difference will be 8°C, so the coefficient is set to 32 by dividing 8 by 0.25. In a case of C, if the component is increased by 0.096 mass%, the temperature difference between the solid phase proportions of 0.9 and 1 will be from 190°C to 153°C, and the amount of change in temperature difference will be 37°C, so the coefficient is set to 385 by dividing 37 by 0.096.

From the above, according to (Equation 1), the results show that, when the addition amount of Nb, Zr, and Ti, which have positive coefficients, increases, the crack susceptibility index increases, making cracking easier. Conversely, when the addition amount of C, which has a negative coefficient, increases, the crack susceptibility index decreases, making cracking more difficult. Thus, (Equation 1) representing such a relationship therebetween was found. In addition, specific example will be shown in examples to be described below, and it was confirmed that the results were also consistent with experimental values.

(Unavoidable impurities)

Furthermore, the balance contains unavoidable impurities. The unavoidable impurities mean trace impurities that are technically difficult to remove due to trace amounts of elements mixed in a raw material, reactions with various members coming into contact with each other during a manufacturing process, and the like. Among these impurities, P, S, O, N, and the like are impurities to be particularly limited. P is preferably 0.02% or less, S is preferably less than 0.005%, O is preferably 0.02% or less, and N is preferably 0.04% or less. As a matter of course, the content of unavoidable impurities is more preferably as small as possible, and even better if it is 0%.

Furthermore, the balance may further contain trace elements such as Mn and Si that have a deoxidizing effect. Each of these trace elements is preferably 1.0% or less. Each of these trace elements is more preferably 0.5% or less. The composition of the alloy powder can be analyzed, for example, through high-frequency inductively coupled plasma (ICP) emission spectrometry.

The alloy powder having the above-described composition is prepared as an alloy powder serving as a raw material for the additive manufactured component according to the present embodiment. The chemical composition of the additive manufactured component is basically the same as the chemical composition of the alloy powder.

[Particle diameter]

As a method for producing the alloy powder of the present embodiment, a gas atomization method, a water atomization method, a jet atomization method, and the like can be used, and an alloy powder is preferably produced through a gas atomization method which facilitates obtaining a spherical powder. In addition, regarding the size of an alloy powder, if the particle diameter is too small, the fluidity will be poor, and conversely, if the particle diameter is too large, the accuracy of a manufactured component will be poor and the defect rate will also be high. Therefore, the average particle diameter (D50) is preferably, for example, 5 to 200 $\mu$m.

< Additive manufactured component>

Next, an additive manufactured component will be described.

The additive manufactured component produced through additive manufacturing using the powder having the above-described alloy composition according to the present invention is an additive manufacturing including a structure having dendrites and element segregation parts between adjacent dendrites in which the dendrites have a width of 5 $\mu$m or less and the element segregation parts have a width of 200 nm or less in cross-sectional structure observation. Further, Cr, Mo, Nb, and Zr are more concentrated in the above-described element segregation parts compared to in the dendrites. Since the additive manufacturing is performed using the powder having the above-described alloy composition, the widths of the element segregation parts can be narrowed and cracking can be suppressed. In other words, the effect of suppressing cracking is achieved not only by the alloy powder but also by the simultaneous narrowing of the element segregation widths even though the widths of the dendrites are narrowed due to rapid cooling.

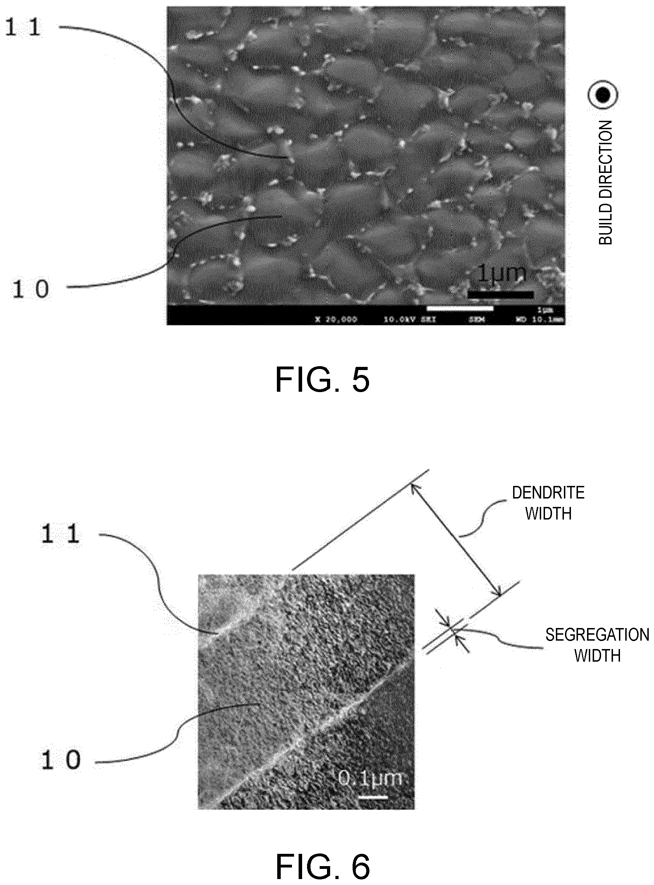

In addition, regarding the dendrites, it is preferable that only the primary dendrites be formed as shown in Fig. 6. "Only the primary dendrites" refers to a case where element segregation parts may be provided between adjacent dendrites, but secondary dendrites are not formed. In addition, if the temperature difference between the solid phase proportions of 0.9 and 1 is large and the inclination (gradient) is steep as described above, the solidification time will be prolonged and the formation of secondary dendrites will be promoted, thereby increasing the widths of the element segregation parts. Conversely, by reducing the temperature difference between the solid phase proportions of 0.9 and 1, the production of the secondary dendrites can be suppressed and a structure consisting of only primary dendrites can be obtained. However, even in a case where the secondary dendrites are formed, if the widths of the element segregation parts are 200 nm or less, cracking can be suppressed. As described above, by performing additive manufacturing using the Ni-based alloy powder of the present invention, an additive manufactured component which is less likely to crack can be obtained.

<Additive manufacturing-method>

An embodiment of an additive manufacturing method using the above-described alloy powder will be described. The additive manufacturing method according to the present invention is a method for manufacturing an additive manufactured component by manufacturing method including: irradiating the above-described Ni-based alloy powder with an electron beam or a laser beam for melting and solidification to build component. One of the characteristics is that it is melted and solidified by irradiating it with an electron beam or a laser beam.

The embodiment in which irradiation is performed with an electron beam or a laser beam for melting and solidification to build component can also be applied to both a powder bed fusion (PBF) coupling method and a directed energy deposition (DED) method which are additive manufacturing methods (referred to as additive manufacturing methods in the present invention) for metallic materials.

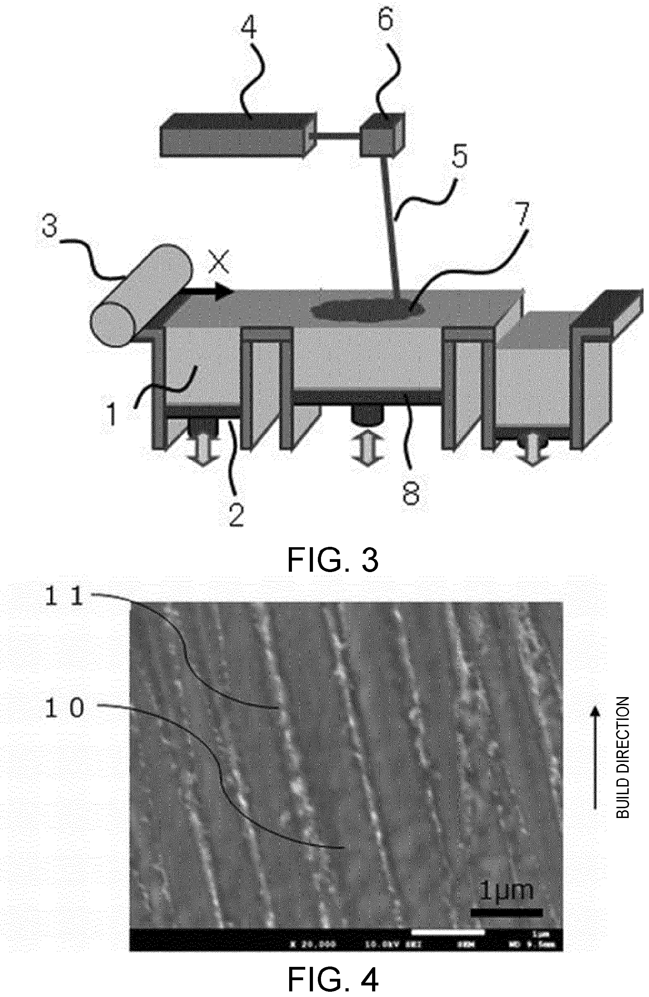

Fig. 3 illustrates a schematic configuration of a laser additive manufacturing method, in which additive manufacturing is performed using a laser as a heat source, in the powder bed fusion coupling method. As shown in Fig. 3, 1 is an alloy powder serving as a raw material, 2 is a powder supply stage, 3 is a coat blade, 4 is a laser oscillator, 5 is a laser beam, 6 is a galvanometer devise, 7 is a build component (additive manufactured component), and 8 is a build stage.

In the additive manufacturing, the powder supply stage 2 is elevated by a predetermined distance, the build stage 8 is lowered by a predetermined distance, and the coat blade 3 is moved in the X-direction to supply the alloy powder 1 onto the build stage 8. The laser beam 5 from the laser oscillator 4 is controlled by the galvanometer devise 6 and applied to the alloy powder in the supplied region, and the alloy powder is selectively melted and solidified to build a solidification layer. By repeating this process, a three-dimensional built component 7 is built.

The conditions for additive manufacturing may be, for example, a layer thickness of 10 to 200 $\mu$m, a laser power of 50 to 1,000 W, a scanning speed of 100 to 5,000 mm/s, and a scanning interval of 0.05 to 0.5 mm. For the purpose of improving the molding accuracy or preventing an unmelted Ni-based alloy powder, the conditions are preferably a layer thickness of 20 to 50 $\mu$m, a laser power of 100 to 200 W, a scanning speed of 600 to 1,200 mm/s, and a scanning interval of 0.05 to 0.12 mm. Examples

Hereinafter, examples of the present invention will be described. However, the present invention is not limited to the following examples and the like.

As the examples, additive manufactured component (hereinafter simply referred to as manufactured component molded articles) were respectively manufactured for 8 types of powders from an alloy powder A to an alloy powder H shown in Table 1. Manufactured component each having a size of 10 mm × 10 mm × 10 mm were manufactured through an additive manufacturing method using a PBF type molding device (Mlab-200R manufactured by Concept Laser Ltd) shown in Fig. 3. The building conditions were set such that the layer thickness per layer became 30 $\mu$m, one of the laser power was appropriately selected from 140, 160, 180, and 200 W, one of the scanning speed was appropriately selected from 600, 800, 1,000, 1,200, 1,400, and 1,600 mm/s, and the scanning interval became 0.07 mm. A cross section of each manufactured component manufactured in this manner was cut and polished to a mirror surface, a photograph of an area of 8 mm long × 8 mm wide was imaged, and the area proportion (called a void rate) of voids having a maximum diameter of 5 $\mu$m or more was measured through binarization image processing. As a result, the presence or absence of cracks and the cracking rate were determined with an optical microscope and a scanning electron microscope (SEM) for molded articles having a void rate of 0.1% or less. This is because errors are likely to occur in determination of cracking under the conditions where the void rate is high. At this time, a defect with a circularity of 0.3 or less and a maximum diameter of 5 $\mu$m or more in a binarized image was regarded as a crack, half of a perimeter was regarded as a crack length, and a total crack length ($\mu$m) per square millimeter was defined as a cracking rate to perform a calculation. Table 1 shows evaluation results of cracks and cracking rates. The numerical values of the elements are in mass%. Crack susceptibility indexes were calculated using the compositions of the powders (Equation 1).

As the alloy powders, powders which were obtained by classifying spherical powders obtained through a gas atomization method and had an average particle diameter (D50) of 34 $\mu$m were used.

[Table 1]

| Powder | Ni | Cr | Al | Mo | Nb | Ti | Zr | B | C | Index | Cracks | Crack rate |
|---|---|---|---|---|---|---|---|---|---|---|---|---|
| A | Bal | 12.1 | 5.69 | 4.53 | 2.03 | 0.65 | 0.10 | 0.00 | 0.014 | 324 | Present | 7.20 |
| B | Bal | 12.6 | 6.27 | 4.08 | 1.91 | 0.04 | 0.11 | 0.010 | 0.170 | 237 | Absent | 0 |
| C | Bal | 12.6 | 6.45 | 4.09 | 1.95 | 0.64 | 0.15 | 0.012 | 0.167 | 288 | Present | 5.85 |
| D | Bal | 12.2 | 6.46 | 3.98 | 1.96 | 0.20 | 0.16 | 0.010 | 0.164 | 282 | Present | 0.27 |
| E | Bal | 13.0 | 6.00 | 4.50 | 2.30 | 0.75 | 0.11 | 0.00 | 0.104 | 332 | Present | 3.55 |
| F | Bal | 12.5 | 5.50 | 4.51 | 2.31 | 0.74 | 0.01 | 0.00 | 0.100 | 295 | Present | 3.33 |
| G | Bal | 13.5 | 6.4 | 4.00 | 1.91 | 0.50 | 0.01 | 0.011 | 0.15 | 284 | Present | 2.11 |
| H | Bal | 12.6 | 6.44 | 4.12 | 1.95 | 0.00 | 0.12 | 0.010 | 0.183 | 241 | Absent | 0 |

In the alloy powders A, C, D, E, F, and G, the cracking rate was greater than 0 and cracks occurred. However, in the alloy powders B and H, the cracking rate was 0 and cracks did not occur. All of the alloy powders A, C, D, E, F, and G in which cracks occurred had a crack susceptibility index greater than 270. Among these, in the alloy powders A, C, E, and F, the Ti content was high and the crack susceptibility index was high, including over 300. In addition, the powder A had a large amount of Ti, a small amount of C, and the highest cracking rate. On the other hand, the alloy powders B and H in which cracks did not occur respectively had crack susceptibility indexes of 237 and 241, both of which were 270 or less. Ti was not added to the alloy powder H. From the above, it was found that it is effective to select an alloy composition that satisfies (Equation 1) and has a crack susceptibility index of 270 or less. In addition, it was found that it is effective to keep an elemental balance of (Equation 1) while reducing the Ti content.

[Structure of additive manufactured component]

Fig. 4 shows a structure photograph (magnification of 20000 times) of a manufactured component which has been subjected to additive manufacturing using the alloy powder B (example) of Table 1 and imaged from the build direction. Fig. 4 was observed with a scanning electron microscope (manufactured by JEOL Ltd., model number JSM-7900F). The upper surface direction on the surface of the paper is a build direction. Dendrites (primary dendrites) 10 are formed in parallel. The dendrites referred to in the present invention are structures different from dendritic crystals found in cast structures and the like, and refer to forms of solidification structures extending parallel to the build direction. In the case of Fig. 4, the pitch (interval) of adjacent dendrites 10, that is, the widths of the dendrites 10 were about 1 $\mu$m. During building, the scanning rate is high, the cooling rate is high due to melting and solidifying, and the widths of the dendrites 10 become narrower due to rapid cooling, making cracking easier. However, it was found that use of the alloy powder of the present invention was effective for preventing cracking even if the widths of the dendrites 10 were 5 $\mu$m or less.

Similarly, Fig. 5 shows a structure photograph (magnification of 20000 times) of a manufactured component which has been subjected to manufacturing using the alloy powder B of Table 1 and imaged from the surface direction perpendicular to the build direction. Fig. 5 is a photograph observed with a scanning electron microscope (manufactured by JEOL Ltd., model number JSM-7900F). The vertical direction on the surface of the paper is a build direction. As shown in Fig. 5, a substantially circular texture with a diameter of about 1 $\mu$m was observed. It can be inferred from the structure photographs of Figs. 4 and 5 that the cylindrical dendrites 10 are formed.

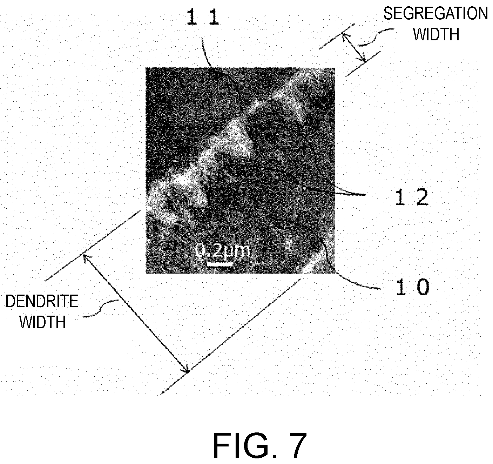

Next, Fig. 6 shows a structure photograph (magnification of 80000 times) of a manufactured component of an alloy powder without occurrence of cracks in which the widths of the dendrites 10 and the element segregation parts 11 of the additive manufactured component built-using the alloy powder B are shown. Fig. 6 is a photograph observed with a transmission electron microscope (manufactured by JEOL Ltd., model number ARM-200F). As shown in Fig. 6, the dendrites 10 are only primary dendrites, and no formation of secondary dendrites 12 (refer to Fig. 7) is observed. A white line between adjacent dendrites 10 is an element segregation part 11. This looks white because the transmittance of an electron beam is different from that of the dendrites 10, and has a composition different from those of the dendrites 10 (indicating that elements are segregated). The widths of the dendrites 10 were about 1 $\mu$m, and the widths of the element segregation parts 11 were about 40 nm. In the case of this example, since there is no formation of the secondary dendrites 12, the widths of the element segregation parts 11 are regarded as widths of only the element segregation parts which are boundary parts of the primary dendrites.

Table 2 shows results of a component analysis of the structure of Fig. 6 through an energy dispersive X-ray analysis method. It can be seen that Cr, Mo, Nb, and Zr are more segregated in the element segregation parts 11 compared to in the dendrites 10. In particular, it can be seen that Mo is segregated 4 times or more than in the dendrites 10, Nb is segregated 10 times or more than in the dendrites 10, and Zr which is not detected in the dendrites 10 is segregated in the element segregation parts 11. In this manner, it is thought that although the element segregation parts 11 were produced in the alloy powder B, the widths thereof were narrow, so cracks did not occur.

[Table 2]

| | Ni | Cr | Al | Mo | Nb | Ti | Zr |
|---|---|---|---|---|---|---|---|
| Dendrite | 78.2 | 11.9 | 3.0 | 4.9 | 2.0 | 0.1 | 0.0 |
| Boundary (Segregated part) | 26.3 | 23.1 | 0.9 | 24.5 | 21.2 | 0.0 | 4.0 |

Next, Fig. 7 shows a structure photograph (magnification of 40000 times) of a molded body with cracks occurred in which the widths of the dendrites 10 and the element segregation parts 11 of the lamination molded article molded using the alloy powder C (comparative example) are shown. Fig. 7 is a photograph observed with a transmission electron microscope (manufactured by JEOL Ltd., model number ARM-200F). The widths of the dendrites 10 are about 1.2 $\mu$m, and the secondary dendrites 12 are formed perpendicular to the growth direction of the dendrites 10. As shown in Fig. 7, there are white element segregation parts 11 between the secondary dendrites 12, and the widths of the element segregation parts 11 including the secondary dendrites 12 are about 300 nm.

Table 3 shows results of a component analysis of the structure of Fig. 7 through an energy dispersive X-ray analysis method. The segregated elements are the same as those of Fig. 6. The widths of the element segregation parts 11 of the manufactured component in which cracks occur are greater than 200 nm for any of the other alloy powders, so it is thought that if the widths of the element segregation parts 11 are wide, the solidification time becomes longer, whereby cracks are likely to occur. For this reason, it was found that the widths of the element segregation parts 11 are preferably 200 nm or less. In addition, the formation of the secondary dendrites 12 widens the widths of the element segregation parts 11, so it was found that it is preferable that the secondary dendrites 12 not be formed and the structure be consisting of only the primary dendrites 10.

[Table 3]

| | Ni | Cr | Al | Mo | Nb | Ti | Zr |
|---|---|---|---|---|---|---|---|
| Dendrite | 77.8 | 11.7 | 3.3 | 4.4 | 2.2 | 0.6 | 0.0 |
| Boundary (Segregated part) | 24.6 | 12.3 | 0.9 | 24.6 | 31.5 | 3.1 | 3.0 |

[Evaluation of strength of additive manufactured component]

An additive manufactured component was manufactured using the alloy powder B. An additive manufacturing method was used with the PBF type molding device Mlab-200R manufactured by Concept Laser similarly to the samples used for the cracking evaluation or structure observation. The build conditions are a layer thickness of 30 $\mu$m, a laser power of 200 W, a scanning speed of 1000 mm/s, and a scanning interval of 0.1 mm. It was confirmed through cross section observation of the manufactured component that there were no cracks. In addition, the cross section of the manufactured component was polished to a mirror surface, a photograph of an area of 8 mm long $\times$ 8 mm wide was imaged, and the area proportion of voids having a maximum diameter of 5 $\mu$m or more was measured through binarization image processing. As a result, the void rate was 0.02%, which was favorable. After the molding, solution heat treatment was carried out at 1177°C for 2 hours, and then aging heat treatment was carried out at 927°C for 16 hours. This manufactured component was subjected to a high-temperature creep rupture test under the conditions of 980°C and 150 MPa. As a result, since there was no crack in the manufactured component, favorable values such as a rupture time of 46 hours and an elongation after breakage of 25% were obtained. In other words, it was confirmed that a crack-free molded body having properties such as an elongation of 20% or more and a breakage time of 40 hours or longer in the high-temperature creep rupture test under the conditions of 980°C and 150 MPa was obtained.

Similarly, a molded article was manufactured using the alloy powder H. An additive manufacturing method was used with the PBF type molding device Mlab-200R manufactured by Concept Laser similarly to the samples used for the cracking evaluation or structure observation. The build conditions are a layer thickness of 30 $\mu$m, a laser power of 190 W, a scanning speed of 1000 mm/s, and a scanning interval of 0.08 mm. It was confirmed through cross section observation of the molded article that there were no cracks. In addition, the cross section of the manufactured component was polished to a mirror surface, a photograph of an area of 8 mm long $\times$ 8 mm wide was imaged, and the area proportion of voids was measured through binarization image processing. As a result, the void rate was 0.01%, which was favorable. After the molding, solution heat treatment was carried out at 1250°C for 10 hours, and then aging heat treatment was carried out at 927°C for 16 hours. This molded article was subjected to a high-temperature creep rupture test under the conditions of 980°C and 150 MPa. As a result, favorable values were obtained such that the molded article had no cracks, an elongation after breakage of 4%, and a significantly long breakage time of 62 hours. In other words, it was confirmed that excellent void rate and high-temperature creep rupture properties were obtained even in a case where Ti is not incorporated.

Since the alloy powders A, C, D, E, F, and G had cracks occurred, these were not subjected to a creep rupture test from the start.

[Reference Signs List]

1 Alloy powder
2 Powder supply stage
3 coat blade
4 Laser oscillator
5 Laser beam
6 galvanometer devise
7 manufactured component
8 build stage
10 Dendrite (primary dendrite)
11 Element segregation part
12 Secondary dendrite

## Claims

1. A Ni-based alloy powder for additive manufacturing, comprising, in mass%:

   10.0% to 16.0% of Cr;
   4.0% to 9.0% of Al;
   1.0% to 6.0% of Mo;
   0.5% to 4.0% of Nb;
   0.5% or less of Ti;
   0.5% or less of Zr;
   0.06% to 0.4% of C; and
   0.04% or less of B with the balance being Ni and unavoidable impurities,
   wherein $150 \leq 120Nb+650Zr+32Ti-385C \leq 270$ is satisfied.

2. The Ni-based alloy powder for additive manufacturing according to claim 1,
   wherein the Ti content is 0.002% to 0.2%.

3. An additive manufactured component, comprising:

   a composition which contains, in mass%,
   10.0% to 16.0% of Cr,
   4.0% to 9.0% of Al,
   1.0% to 6.0% of Mo,
   0.5% to 4.0% of Nb,
   0.5% or less of Ti,
   0.5% or less of Zr,
   0.06% to 0.4% of C, and
   0.04% or less of B with the balance being Ni and unavoidable impurities, and
   satisfies $150 \leq 120Nb+650Zr+32Ti-385C \leq 270$; and
   a structure having dendrites (10) and element segregation parts (11) between adjacent dendrites,
   wherein the dendrites (10) have a width of 5 $\mu$m or less and the element segregation parts (11) have a width of 200 nm or less in cross-sectional structure observation.

4. The additive manufactured component according to claim 3,
wherein at least one of Cr, Mo, Nb, and Zr is more concentrated in the element segregation parts (11) than in the dendrites (10).

5. An additive manufactured component manufacturing method, comprising:
irradiating the Ni-based alloy powder for additive manufacturing according to claim 1 to 2 with an electron beam or a laser beam for melting and solidification to build component.

**Patentansprüche**

1. Ni-basiertes Legierungspulver zur additiven Fertigung, umfassend, in Massenprozent:

   10,0 % bis 16,0 % Cr;
   4,0 % bis 9,0 % Al;
   1,0 % bis 6,0 % Mo;
   0,5 % bis 4,0 % Nb;
   0,5 % oder weniger Ti;
   0,5 % oder weniger Zr;
   0,06 % bis 0,4 % C und
   0,04 % oder weniger B, wobei der Rest Ni und unvermeidbare Verunreinigungen sind,
   wobei $150 \leq 120Nb+650Zr+32Ti-385C \leq 270$ erfüllt ist.

2. Ni-basiertes Legierungspulver zur additiven Fertigung gemäß Anspruch 1,
wobei der Ti-Gehalt 0,002 % bis 0,2 % beträgt.

3. Additiv gefertigtes Bauteil, umfassend:

   eine Zusammensetzung, die in Massenprozent enthält
   10,0 % bis 16,0 % Cr,
   4,0 % bis 9,0 % Al,
   1,0 % bis 6,0 % Mo,
   0,5 % bis 4,0 % Nb,
   0,5 % oder weniger Ti,
   0,5 % oder weniger Zr,
   0,06 % bis 0,4 % C und
   0,04 % oder weniger B, wobei der Rest Ni und unvermeidbare Verunreinigungen sind, und
   $150 \leq 120Nb+650Zr+32Ti-385C \leq 270$ erfüllt; und
   eine Struktur, die Dendriten (10) und Element-Seigerungsteile (11) zwischen benachbarten Dendriten aufweist,
   wobei die Dendriten (10) eine Breite von 5 $\mu$m oder weniger und die Element-Seigerungsteile (11) eine Breite von 200 nm oder weniger in der Querschnittsstrukturbeobachtung aufweisen.

4. Additiv gefertigtes Bauteil gemäß Anspruch 3,
wobei wenigstens eines von Cr, Mo, Nb und Zr in den Element-Seigerungsteilen (11) stärker konzentriert ist als in den Dendriten (10).

5. Herstellungsverfahren eines additiv gefertigten Bauteils, umfassend:
Bestrahlen des Ni-basierten Legierungspulvers für die additive Fertigung gemäß Anspruch 1 bis 2 mit einem Elektronenstrahl oder einem Laserstrahl zum Schmelzen und Verfestigen, um ein Bauteil aufzubauen.

**Revendications**

1. Poudre d'alliage à base de Ni pour la fabrication additive, comprenant en % en masse :

   de 10,0 % à 16,0 % de Cr ;
   de 4,0 % à 9,0 % d'Al ;
   de 1,0 % à 6,0 % de Mo ;

de 0,5 % à 4,0 % de Nb ;
0,5 % ou moins de Ti ;
0,5 % ou moins de Zr ;
de 0,06 % à 0,4 % de C ; et
0,04 % ou moins de B, le reste étant du Ni et des impuretés inévitables,
dans laquelle $150 \leq 120Nb+650Zr+32Ti-385C \leq 270$ est satisfaite.

2. Poudre d'alliage à base de Ni pour la fabrication additive selon la revendication 1,
   dans laquelle la teneur en Ti est de 0,002 % à 0,2 %.

3. Composant fabriqué de manière additive, comprenant :

   une composition qui contient, en % en masse,
   de 10,0 % à 16,0 % de Cr,
   de 4,0 % à 9,0 % d'Al,
   de 1,0 % à 6,0 % de Mo,
   de 0,5 % à 4,0 % de Nb,
   0,5 % ou moins de Ti,
   0,5 % ou moins de Zr,
   de 0,06 % à 0,4 % de C, et
   0,04 % ou moins de B, le reste étant du Ni et des impuretés inévitables, et satisfait
   $150 \leq 120Nb+650Zr+32Ti-385C \leq 270$ ; et
   une structure ayant des dendrites (10) et des parties de ségrégation d'éléments (11) entre des dendrites
   adjacentes,
   dans lequel les dendrites (10) ont une largeur de 5 $\mu$m ou moins et les parties de ségrégation d'éléments (11) ont
   une largeur de 200 nm ou moins dans l'observation de la structure en coupe.

4. Composant manufacturé de manière additive, selon la revendication 3,
   dans lequel au moins un parmi Cr, Mo, Nb et Zr est plus concentré dans les parties de ségrégation d'éléments (11) que
   dans les dendrites (10).

5. Procédé de fabrication d'un composant fabriqué de manière additive, comprenant :
   l'irradiation de la poudre d'alliage à base de Ni pour la fabrication additive selon la revendication 1 ou 2 avec un
   faisceau d'électrons ou un faisceau laser pour la fusion et la solidification afin de construire le composant.

FIG. 1

FIG. 2

FIG. 3

FIG. 4

FIG. 5

FIG. 6

FIG. 7

**REFERENCES CITED IN THE DESCRIPTION**

**Patent documents cited in the description**

- JP 2020147782 A